# EUROPEAN PATENT APPLICATION

(11) **EP 4 617 591 A1**
(43) Date of publication of application: **17.09.2025**
(21) Application number: 23934767.7
(22) Date of filing: 29.06.2023
(51) Int. Cl.: F25C 5/02, F25D 23/02, F25D 11/02

(54) **REFRIGERATION APPARATUS**

(30) Priority: 28.04.2023 CN 202310491246
(71) Applicant: Hefei Hualing Co., Ltd., Hefei, Anhui 230601 (CN); Hefei Midea Refrigerator Co., Ltd., Hefei, Anhui 230088 (CN); Midea Group Co., Ltd., Foshan, Guangdong 528311 (CN)
(72) Inventor: QUAN, Xin, Hefei, Anhui 230601 (CN); REN, Zhijie, Hefei, Anhui 230601 (CN); LIN, Zhaowei, Hefei, Anhui 230601 (CN); ZHU, Zhichao, Hefei, Anhui 230601 (CN)
(74) Representative: RGTH
(86) International application number: PCT/CN2023/103942
(87) International publication number: WO 2024/221591

(57) **Abstract**

A refrigeration apparatus (10) includes: a cabinet body (11), a first refrigeration compartment (12), a second refrigeration compartment (13), a first door body (14), a second door body (15), an ice-making assembly (200), an ice-retrieving assembly (300), an ice-transfer channel (120), an ice-transfer assembly (101), a first sealing member (510), and a second sealing member (520). A first channel opening (141) is defined at a top portion of the first door body (14). A second channel opening (151) is defined at a bottom portion of the second door body (15). The first sealing member (510) is disposed on the first door body (14) and configured to expose or cover the first channel opening (141). The second sealing member (520) is disposed on the second door body (15) and is configured to expose or cover the second channel opening (151).

## Description

This application claims priority to Chinese Patent Application No. 202310491246.2, filed on April 28, 2023 and entitled "REFRIGERATION APPARATUS" in the National Intellectual Property Administration of China, the entire contents of which are incorporated herein by reference.

### TECHNICAL FIELD

The present disclosure relates to the technical field of refrigeration devices, and in particular to a refrigeration apparatus.

### BACKGROUND

Existing ice harvesting technologies may usually rely on manual retrieval or utilize gravity to achieve automatic ice dispensing at a position below an ice storage container. In order to enhance convenience, some refrigeration apparatuses, such as refrigerators, may be configured to generate ice in a freezing compartment, transfer the ice from the freezing compartment to a refrigeration compartment through an ice-transfer channel, and dispense the ice from a refrigeration door body at an upper portion of the refrigerator, thereby enabling ice harvesting at a suitable height. To further reduce an occupation of usable space, the inventors of the present disclosure consider transferring the ice through both the refrigeration door body and a freezing door body. However, since a gap may exist between the refrigeration door body and the freezing door body, an end of an ice-transportation pipeline of the refrigeration door body and an end of an ice-transportation pipeline of the freezing door body that are adjacent to each other may be exposed, rendering how to realize a sealing of the exposed ends of the ice-transportation pipelines a technical problem urgently needing to be solved.

### SUMMARY

Some embodiments of the present disclosure may provide a refrigeration apparatus, in order to address a technical problem of realizing a sealing of exposed ends of ice-transportation pipelines.

According to a first aspect of the present disclosure, a technical solution adopted by the present disclosure may provide a refrigeration apparatus. The refrigeration apparatus may comprise a cabinet body, a first door body, a second door body, an ice-making assembly, an ice-retrieving assembly, an ice-transfer channel, an ice-transfer assembly, a first sealing member, and a second sealing member. The cabinet body may comprise a first refrigeration compartment and a second refrigeration compartment. The second refrigeration compartment may be located above the first refrigeration compartment. The first door body may be configured to expose or cover the first refrigeration compartment and may define a first channel opening at a top portion of the first door body. The second door body may be configured to expose or cover the second refrigeration compartment and may define a second channel opening at a bottom portion of the second door body. The ice-making assembly may be disposed in the first refrigeration compartment. The ice-retrieving assembly may be disposed on the second door body. The ice-transfer channel may comprise a first sub-channel and a second sub-channel. The first sub-channel may be disposed in the first door body. The first channel opening may be disposed corresponding to the first sub-channel. The second sub-channel may be disposed in the second door body. The second sub-channel may be in communication with the ice-retrieving assembly. The second channel opening may be disposed corresponding to the second sub-channel. The ice-transfer assembly may be disposed in the first refrigeration compartment, be in communication with the first sub-channel, and be configured to drive ice tube produced by the ice-making assembly to be transferred to the ice-retrieving assembly through the ice-transfer channel. The first sealing member may be disposed on the first door body and configured to expose or cover the first channel opening. The second sealing member may be disposed on the second door body and configured to expose or cover the second channel opening.

Some technical effects of the present disclosure may comprise the following. Through the arrangement of the first sealing member and the second sealing member, in a case where the ice retrieval is not desired, the first sealing member may move to cover or block the first channel opening, which reduces the risk of foreign matter entering into the first sub-channel or the first door body through the exposed first channel opening. The second sealing member may move to cover or block the second channel opening, which reduces the risk of foreign matter entering into the second sub-channel or the second door body through the exposed second channel opening, thereby not only reducing the intrusion of foreign matter but also the cold air leakage.

### BRIEF DESCRIPTION OF THE DRAWINGS

In order to more clearly illustrate the technical solutions in some embodiments of the present disclosure, a brief introduction will be given below to the drawings required in the description of the embodiments. It is evident that the drawings described below are merely some embodiments of the present disclosure, and a person of ordinary skills in the art may obtain other drawings based on the following drawings without creative work.
FIG. 1 is an overall schematic structural view of a refrigeration apparatus according to some embodiments of the present disclosure.
FIG. 2 is another overall schematic structural view of a refrigeration apparatus according to some embodiments of the present disclosure.
FIG. 3 is a schematic structural view of a second door body of a refrigeration apparatus according to some embodiments of the present disclosure.
FIG. 4 is a partial schematic structural view of both a first door body and a second door body of a refrigeration apparatus according to some embodiments of the present disclosure, where a movable channel extends from the door bodies.
FIG. 5 is a partial schematic structural view of a first door body of a refrigeration apparatus according to some embodiments of the present disclosure, where a first movable channel retracts into the first door body.
FIG. 6 is a partial schematic structural view of a first door body of a refrigeration apparatus according to some embodiments of the present disclosure, where a first movable channel extends out of the first door body.
FIG. 7 is a schematic structural view of a first door body of a refrigeration apparatus according to some embodiments of the present disclosure.
FIG. 8 is an enlarged schematic structural view of portion C in FIG. 7.
FIG. 9 is a partial schematic structural view of a first door body of a refrigeration apparatus according to some embodiments of the present disclosure, where a first sealing member is shown.
FIG. 10 is a partial schematic structural view of a second door body of a refrigeration apparatus according to some embodiments of the present disclosure, where a second sealing member is shown.
FIG. 11 is another partial schematic structural view of a first door body of a refrigeration apparatus according to some embodiments of the present disclosure, where a third sealing member is shown.
FIG. 12 is a partial schematic structural view of an ice-transfer device according to some other embodiments of the present disclosure.
FIG. 13 is a partial schematic structural view of an ice-transfer device according to some other embodiments of the present disclosure.
FIG. 14 is a partial schematic structural view of an ice-transfer assembly according to some other embodiments of the present disclosure.
FIG. 15 is an overall schematic structural view of an ice-transfer device according to some other embodiments of the present disclosure.
FIG. 16 is a schematic structural view of an ice-transfer channel being disposed on door bodies of both a first refrigeration compartment and a second refrigeration compartment according to some other embodiments of the present disclosure.

### DETAILED DESCRIPTION

To make the above objectives, features, and advantages of the present disclosure clearer and more understandable, detailed descriptions of some embodiments of the present disclosure may be provided below in conjunction with the accompanying drawings. It may be understood that the embodiments described herein may only serve to explain the present disclosure, and may not limit the present disclosure. Additionally, it may be noted that, for the sake of clarity, only parts related to the present disclosure may be illustrated in the drawings, rather than all structures. Based on the embodiments in the present disclosure, all other embodiments obtained by the person of ordinary skills in the art without creative work may fall within the scope of protection of the present disclosure.

The term "embodiment" as mentioned herein may indicate that specific features, structures, or characteristics described in connection with the embodiment may be comprised in at least one embodiment of the present disclosure. The appearance of such phrases at various places in the specification may not necessarily refer to the same embodiment, nor may it be interpreted as mutually exclusive or alternative embodiments unless explicitly stated. The person of ordinary skills in the art may explicitly or implicitly understand that the embodiments described herein may be combined with other embodiments.

In the description of the present disclosure, the terms "first" and "second" may be used for descriptive purposes only and may not be construed as indicating or implying relative importance or implicitly indicating the number of technical features referred to. Therefore, features limited by "first" and "second" may explicitly or implicitly comprise one or more of the features. In the description of the present disclosure, "plurality" may mean two or more, unless otherwise specifically defined.

In the description of the present disclosure, it may be noted that, unless otherwise expressly defined, the terms "install," "connect," and "couple" may be interpreted broadly. For example, such connections may be fixed, detachable, or integral; they may be mechanical, electrical, or communicative; they may be direct or indirect via intermediaries; and they may comprise internal communications or interactions between two components. The person of ordinary skills in the art may interpret the specific meanings of the aforementioned terms in the present disclosure based on the specific context.

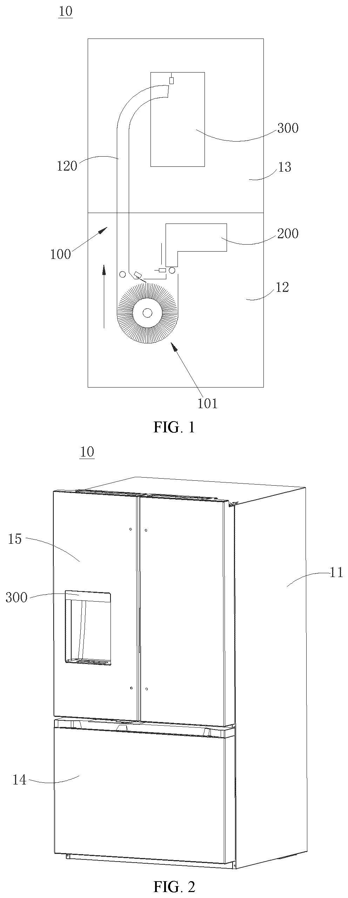

As shown in FIG. 1 and FIG. 2, FIG. 1 is an overall schematic structural view of a refrigeration apparatus according to some embodiments of the present disclosure, and FIG. 2 is another overall schematic structural view of a refrigeration apparatus according to some embodiments of the present disclosure.

Some embodiments of the present disclosure may provide a refrigeration apparatus 10. The refrigeration apparatus 10 may comprise a cabinet body 11, a first refrigeration compartment 12, a second refrigeration compartment 13, a first door body 14, a second door body 15, an ice-making assembly 200, an ice-retrieving assembly 300, and an ice-transfer device 100. Each of the first refrigeration compartment 12 and the second refrigeration compartment 13 may be defined within the cabinet body 11 and may have one side opened. The first door body 14 may be configured to expose or cover the first refrigeration compartment 12. The second door body 15 may be configured to expose or cover the second refrigeration compartment 13. The second refrigeration compartment 13 may be located above the first refrigeration compartment 12. The ice-making assembly 200 may be disposed in the first refrigeration compartment 12. The ice-retrieving assembly 300 may be disposed on the second door body 15. The ice-transfer device 100 may comprise an ice-transfer channel 120 and an ice-transfer assembly 101. The ice-transfer assembly 101 may be disposed in the first refrigeration compartment 12 or on the first door body 14. The ice-transfer channel 120 may be in communication with or connected to the ice-retrieving assembly 300 and may provide a transfer path for ice to move from the first refrigeration compartment 12 to the second door body 15. The ice-transfer assembly 101 may be in communication with or connected to the ice-making assembly 200 and may be configured to drive the ice produced by the ice-making assembly 200 out to the ice-transfer channel 120. The first refrigeration compartment 12 may be a freezing compartment. The second refrigeration compartment 13 may be a refrigeration compartment. The ice-transfer device 100 may be configured to transfer or transport the ice from the first refrigeration compartment 12 to the ice-retrieving assembly 300 located above, thereby facilitating ice retrieval by the user and improving user experience. Furthermore, the ice-making assembly 200 may be disposed in the first refrigeration compartment 12, which enables the ice-making assembly 200 to share a cold source with the first refrigeration compartment 12. In this case, since the ice-making assembly 200 is not disposed in the second refrigeration compartment 13, a separate evaporator may not be required to be disposed in the second refrigeration compartment 13 for ice making, thereby saving cost and potential space occupied by the separate evaporator in the second refrigeration compartment 13, and increasing the volumetric efficiency or available volume ratio of the second refrigeration compartment 13. The refrigeration apparatus 10 of some embodiments of the present disclosure may not only improve the ice harvesting efficiency but also resolve the issues of inconvenient ice retrieval and the space occupation in the second refrigeration compartment 13.

In some embodiments, the first door body 14 and the second door body 15 may be arranged on the cabinet body 11 in a rotatable manner, a slidable manner, or other manners based on actual requirements.

In some embodiments, to further reduce the space occupation within the refrigeration compartments, the ice-transfer channel 120 may be disposed in the first door body 14 and the second door body 15. In some embodiments, the ice-transfer channel 120 may comprise a first sub-channel 123 and a second sub-channel 124. The first sub-channel 123 may be disposed in the first door body 14 and may be in communication with or connected to the ice-transfer assembly 101. The second sub-channel 124 may be disposed in the second door body 15 and may be in communication with or connected to the ice-retrieving assembly 300.

Due to the presence of a gap between the first door body 14 and the second door body 15, a gap may exist between an end of the first sub-channel 123 and an end of the second sub-channel 124 that are adjacent to each other. In a case where the refrigeration apparatus 10 is configured to perform the ice dispensing and the ice-transfer channel 120 is configured to transport the ice, a risk of jamming or contamination, etc. may exist during the ice transfer process.

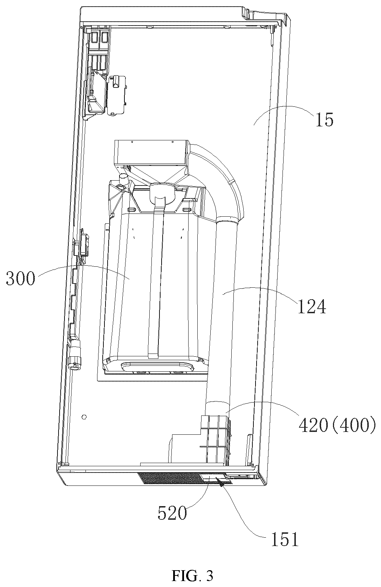

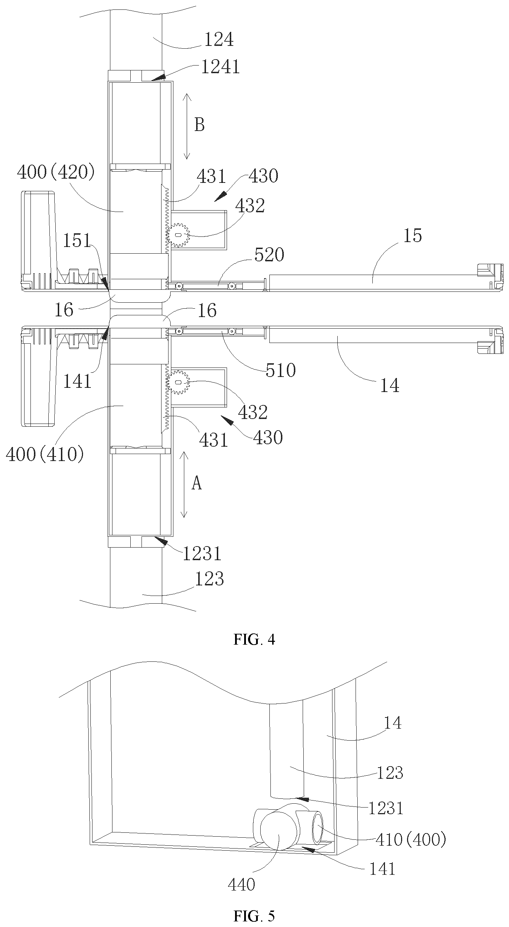

As further shown in FIG. 3 and FIG. 4, FIG. 3 is a schematic structural view of a second door body of a refrigeration apparatus according to some embodiments of the present disclosure, and FIG. 4 is a partial schematic structural view of both a first door body and a second door body of a refrigeration apparatus according to some embodiments of the present disclosure, where a movable channel extends from the door bodies.

To solve the aforementioned problems, in some embodiments, the ice-transfer channel 120 may further comprise a movable channel 400. A channel ice outlet 1231 may be defined at an end of the first sub-channel 123 close to the second sub-channel 124. A channel ice inlet 1241 may be defined at an end of the second sub-channel 124 close to the first sub-channel 123. The movable channel 400 may be configured to communicate or connect the channel ice outlet 1231 and the channel ice inlet 1241. Ice may enter the movable channel 400 from the channel ice outlet 1231 of the first sub-channel 123, and then move to the second sub-channel 124 through the channel ice inlet 1241. Since the first sub-channel 123 and the second sub-channel 124 may be communicated or connected through the movable channel 400, the gap between the channel ice outlet 1231 and the channel ice inlet 1241 may be reduced or filled. Through the bridging or docking of the movable channel 400, the ice may smoothly move from the first sub-channel 123 to the second sub-channel 124, thereby reducing the risk of jamming. Further, the ice may not have to be directly exposed to the external space during the transition from the first sub-channel 123 to the second sub-channel 124, thereby reducing the risk of contamination.

In some embodiments, the movable channel 400 may comprise the first sub-channel 123. A first channel opening 141 may be defined at a top portion of the first door body 14. A first movable channel 410 may be movably disposed in the first door body 14 and may be configured to extend out of the first channel opening 141 or retract into the first door body 14. In some embodiments, the movable channel 400 may comprise the second sub-channel 124. A second channel opening 151 may be defined at a bottom portion of the second door body 15. A second movable channel 420 may be movably disposed in the second door body 15 and may be configured to extend out of the second channel opening 151 or retract into the second door body 15.

In some embodiments, in a case where the movable channel 400 comprises the first movable channel 410, the first movable channel 410 may extend out of the first channel opening 141 to dock or connect with the second channel opening 151, ensuring smooth passage of ice through the gap between the first door body 14 and the second door body 15. The first movable channel 410 may extend from the first channel opening 141 to a distance from the bottom of the second door body 15 less than a predetermined value, or may extend from the first channel opening 141 to fit closely with the bottom of the second door body 15, or may even extend from the first channel opening 141 into the second channel opening 151, thereby docking or connecting with the channel ice inlet 1241. In this case, in order for the movable channel 400 to better connect or communicate the channel ice outlet 1231 with the channel ice inlet 1241, the second sub-channel 124 may extend toward the second channel opening 151 so that the channel ice inlet 1241 may be defined at the second channel opening 151.

In some embodiments, in a case where the movable channel 400 comprises the second movable channel 420, the second movable channel 420 may extend out of the second channel opening 151 to dock or connect with the first channel opening 141, ensuring smooth passage of ice through the gap between the first door body 14 and the second door body 15. The second movable channel 420 may extend from the second channel opening 151 to a distance from the top of the first door body 14 less than a predetermined value, or may extend from the second channel opening 151 to fit closely with the top of the first door body 14, or may extend from the second channel opening 151 into the first channel opening 141, thereby docking or connecting with the channel ice outlet 1231. In this case, in order for the movable channel 400 to better connect or communicate the channel ice outlet 1231 with the channel ice inlet 1241, the first sub-channel 123 may extend toward the first channel opening 141 so that the channel ice outlet 1231 may be defined at the first channel opening 141.

In some embodiments, in a case where the movable channel 400 comprises both the first movable channel 410 and the second movable channel 420, the first movable channel 410 may be configured to movably extend out of the first channel opening 141, and the second movable channel 420 may be configured to movably extend out of the second channel opening 151. The first movable channel 410 may be in communication with the channel ice outlet 1231. The second movable channel 420 may be in communication with the channel ice inlet 1241. The first movable channel 410 and the second movable channel 420 may be in communication with each other.

A movement manner of the movable channel 400 may comprise but may not be limited to translation and rotation, and may be exemplified below.

In a case where the movable channel 400 comprises the first movable channel 410, in some embodiments, the first movable channel 410 may be movably arranged at the first sub-channel 123 to translate along a first direction A, and the first movable channel 410 may be in communication with the channel ice outlet 1231. The first movable channel 410 may be configured to extend out of the first channel opening 141 or retract into the first door body 14. The first direction A may be an extension direction of the first sub-channel 123 (i.e., an extension direction of a segment of the first sub-channel 123 near the first channel opening 141, where an overall extension direction of the first sub-channel 123 may be substantially bent or curve).

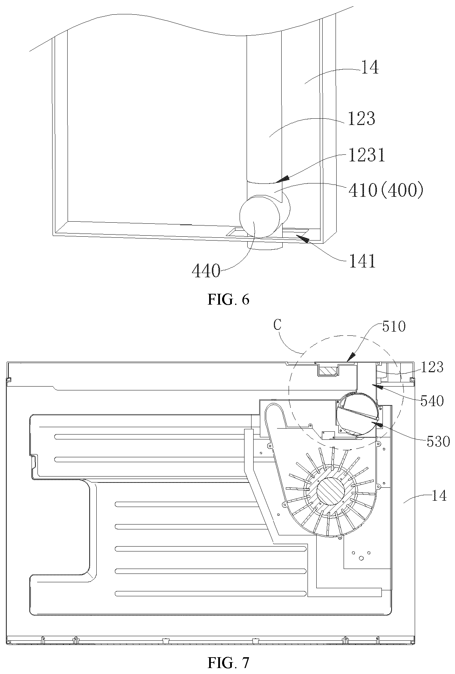

As shown in FIG. 5 and FIG. 6, FIG. 5 is a partial schematic structural view of a first door body of a refrigeration apparatus according to some embodiments of the present disclosure, where a first movable channel retracts into the first door body. FIG. 6 is a partial schematic structural view of a first door body of a refrigeration apparatus according to some embodiments of the present disclosure, where a first movable channel extends out of the first door body. In some other embodiments, the first movable channel 410 may be rotatably disposed in the first door body 14. The first movable channel 410 may be configured to rotate to enable an end of the first movable channel 410 to be in communication with the channel ice outlet 1231 and another end of the first movable channel 410 to be extended out of the first channel opening 141. Alternatively, the first movable channel 410 may be configured to rotate to enable the first movable channel 410 to be disengaged from the channel ice outlet 1231 and retracted into the first door body 14.

Similarly, in a case where the movable channel 400 comprises the second movable channel 420, the second movable channel 420 may be movably arranged at the second sub-channel 124 to translate along a second direction B and the second movable channel 420 may be in communication with the channel ice inlet 1241. The second movable channel 420 may be configured to extend out of the second channel opening 151 or retract into the second door body 15. The second direction B may refer to an extension direction of the second sub-channel 124 (i.e., an extension direction of a segment of the second sub-channel 124 near the second channel opening 151, where an overall extension of the second sub-channel 124 may be substantially bent or curve). In some embodiments, the second movable channel 420 may be rotatably disposed in the second door body 15. The second movable channel 420 may be configured to rotate to enable an end of the second movable channel 420 to be in communication with the channel ice inlet 1241 and another end of the second movable channel 420 to be extended out of the second channel opening 151. Alternatively, the second movable channel 420 may be configured to rotate to enable the second movable channel 420 to be disengaged from the channel ice inlet 1241 and retracted into the second door body 15.

In a case where the movable channel 400 comprises both the first movable channel 410 and the second movable channel 420, the first movable channel 410 and the second movable channel 420 may each adopt the same or different movement manners.

In a case where the first movable channel 410 and the second movable channel 420 are arranged at the first door body 14 and the second door body 15, respectively, for translational movement. The first direction A and the second direction B may be collinear or partially offset depending on actual conditions, which is not limited herein. Moreover, a movement direction of the ice may be from the first sub-channel 123 to the first movable channel 410 and from the second movable channel 420 to the second sub-channel 124. Thus, to reduce a risk of the ice colliding with an end portion of the first movable channel 410, an end portion of the second movable channel 420, or an end portion of the second sub-channel 124 during the ice transport, the first movable channel 410 may be sleeved over an exterior of the first sub-channel 123 and remain being docked or connected with the first sub-channel 123. Further, the second movable channel 420 may be inserted into or disposed through an interior of the second sub-channel 124 and remain being docked or connected with the second sub-channel 124. In this way, an end surface of the first movable channel 410 may not form a stepped surface inside the first sub-channel 123, and an end surface of the second sub-channel 124 may not form a stepped surface inside the second sub-channel 124, thereby ensuring smooth passage of the ice.

The movable channel 400 may realize the corresponding movement manner through any driving mechanism. Examples may be provided below.

In a case where the movable channel 400 is configured to move in translation with within the corresponding door body, the refrigeration apparatus 10 may further comprise a driving member 430. In some embodiments, the driving member 430 may comprise a rack 431, a gear 432, and a motor (not shown in the figure). The rack 431 may be disposed along a translation direction of the movable channel 400 on an outer wall of the movable channel 400. The gear 432 may be engaged or meshed with the rack 431 and rotatably disposed in the corresponding door body. The motor may be configured to drive the gear 432 to rotate, thereby driving the movable channel 400 to move. For example, in a case where the driving member 430 is configured to drive the first movable channel 410 to move, the rack 431 may be disposed along the first direction A on the outer wall of the first movable channel 410. The rack 431 may be rotatably disposed in the first door body 14. The motor may be disposed in the first door body 14. The motor may be configured to drive the gear 432 to rotate and the gear 432 may drive the rack 431 and the first movable channel 410 to reciprocate, thus enabling the first movable channel 410 to be extended out of or retracted into the first channel opening 141 of the first door body 14. To facilitate the arrangement of the rack 431, a positioning block may be fixedly disposed on an outer side of the movable channel 400. The rack 431 may be disposed at the positioning block. A movement of the positioning block may further drive the movable channel 400 to move. In some other embodiments, the driving member 430 may be a linear motor or a linear cylinder. An output end of the driving member 430 may be directly connected to the movable channel 400, such that the driving member 430 may drive the movable channel 400 to move along the corresponding translation direction.

In a case where the movable channel 400 is rotatably disposed in the corresponding door body, a fixing block 440 may be disposed on an outside of the movable channel 400. The refrigeration apparatus 10 may further comprise the driving member 430. In some embodiments, the driving member 430 comprises a driving gear (not shown in the figure), a driven gear (not shown in the figure), and a motor (not shown in the figure). The driven gear may be fixed to the fixing block 440. A rotation axis of the driven gear may be coaxial with a rotation axis of the movable channel 400. The driving gear may be meshed with or engaged with the driven gear. The motor may be configured to drive the driving gear to rotate, thereby further driving the driven gear and the movable channel 400 to rotate. In some other embodiments, the driving member 430 may be a motor. An output end of the motor may be directly connected to the fixing block 440, thereby directly driving the movable channel 400 to rotate.

To reduce the risk of personal injury, in some embodiments, the refrigeration apparatus 10 may further comprise a baffle 16. The baffle 16 may be disposed on a side of the first door body 14 that is away from the cabinet body 11 at an end of the first door body 14 that is close to the second door body 15. The baffle 16 may be disposed corresponding to the movable channel 400. In some embodiments, the baffle 16 may be disposed on a side of the second door body 15 that is away from the cabinet body 11 at end of the second door body 15 that is close to the first door body 14. The baffle 16 may be disposed corresponding to the movable channel 400. The baffle 16 may discourage the users from placing their hands at a position where the movable channel 400 extends, thereby reducing the risk of hand pinching or other accidents.

Due to the presence of the gap between the first door body 14 and the second door body 15, a gap may exist between an end of the first sub-channel 123 and an end of the second sub-channel 124 that are adjacent to each other. In this way, an end of the first sub-channel 123 and an end of the second sub-channel 124 that are adjacent to each other may be exposed, thereby resulting in problems of an intrusion of foreign matter and a cold air leakage, etc.

As further shown in FIG. 4 and FIG. 7, FIG. 7 is a schematic structural view of a first door body of a refrigeration apparatus according to some embodiments of the present disclosure. To address the above problems, in some embodiments, the first channel opening 141 may be defined at the top portion of the first door body 14. The second channel opening 151 may be defined at the bottom portion of the second door body 15. The first channel opening 141 may be disposed corresponding to the first sub-channel 123. The second channel opening 151 may be disposed corresponding to the second sub-channel 124. The ice may enter into the first sub-channel 123, pass sequentially through the first channel opening 141 and the second channel opening 151, then enter into the second sub-channel 124, and finally enter the ice-retrieving assembly 300. The refrigeration apparatus 10 may further comprise a first sealing member 510 and a second sealing member 520. The first sealing member 510 may be configured to expose or cover the first channel opening 141. The second sealing member 520 may be configured to expose or cover the second channel opening 151.

According to the structure described above, through the arrangement of the first sealing member 510, in a case where the ice retrieval is not desired, the first sealing member 510 may move to cover or block the first channel opening 141, which reduces the risk of foreign matter entering into the first sub-channel 123 or the first door body 14 through the exposed first channel opening 141, thereby not only reducing the intrusion of foreign matter but also the cold air leakage. In a case where the ice retrieval is desired, the first sealing member 510 may move to expose the first channel opening 141, without impeding the passage of ice. Through the arrangement of the second sealing member 520, in a case where the ice retrieval is not desired, the second sealing member 520 may move to cover or block the second channel opening 151, which reduces the risk of foreign matter entering into the second sub-channel 124 or the second door body 15 through the exposed second channel opening 151, thereby not only reducing the intrusion of foreign matter but also the cold air leakage. In a case where the ice retrieval is desired, the second sealing member 520 may move to expose the second channel opening 151, without impeding the passage of ice. Thus, during the ice retrieval, the first sealing member 510 may be configured to expose the first channel opening 141 and the second sealing member 520 may be configured to expose the second channel opening 151. In a case where the ice retrieval is finished, the first sealing member 510 may be configured to cover or block the first channel opening 141 and the second sealing member 520 may be configured to cover or block the second channel opening 151.

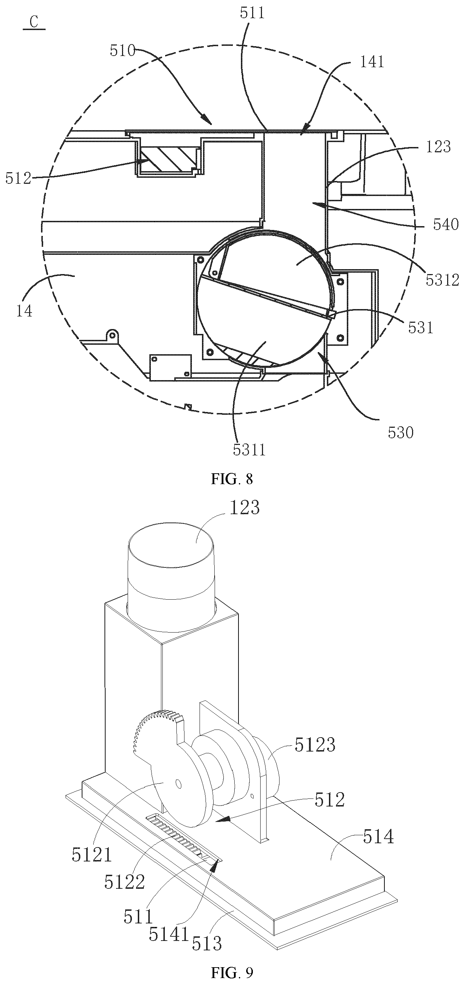

As shown in FIG. 8 and FIG. 9, FIG. 8 is an enlarged schematic structural view of portion C in FIG. 7, and FIG. 9 is a partial schematic structural view of a first door body of a refrigeration apparatus according to some embodiments of the present disclosure, where a first sealing member is shown. The first sealing member 510 may comprise a first sealing cover 511 and a first driving member 512. The first sealing cover 511 may be movably disposed on the first door body 14 and further movably disposed at an end portion of first door body 14 where the first channel opening 141 is located. The first driving member 512 may be configured to drive the first sealing cover 511 to move away from the first channel opening 141, or may be configured to drive the first sealing cover 511 to move to cover the first channel opening 141. In a case where the first sealing cover 511 moves away from the first channel opening 141, the channel opening 141 may be exposed, allowing the ice to pass smoothly. In a case where the first sealing cover 511 covers the first channel opening 141, the first channel opening 141 may be blocked, thereby reducing the intrusion of foreign matter and the cold air leakage.

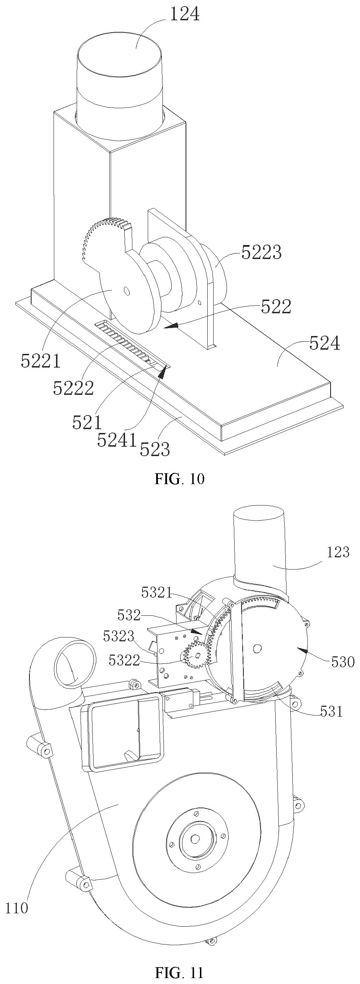

Similarly, as shown in FIG. 10, FIG. 10 is a partial schematic structural view of a second door body of a refrigeration apparatus according to some embodiments of the present disclosure, where a second sealing member is shown. The second sealing member 520 may comprise a second sealing cover 521 and a second driving member 522. The second sealing cover 521 may be movably disposed on the second door body 15 and further movably disposed at an end portion of the second door body 15 where the second channel opening 151 is located. The second driving member 522 may be configured to drive the second sealing cover 521 to move away from the second channel opening 151, or may be configured to drive the second sealing cover 521 to move to cover the second channel opening 151. In a case where the second sealing cover 521 moves away from the second channel opening 151, the second channel opening 151 may be exposed, allowing the ice to pass smoothly. In a case where the second sealing cover 521 covers the second channel opening 151, the second channel opening 151 may be blocked, thereby reducing the intrusion of foreign matter and the cold air leakage.

The first sealing cover 511 and the second sealing cover 521 may be configured to move away from the first channel opening 141 or move to expose the first channel opening 141 using any drive mechanism. In some embodiments, the first sealing cover 511 may be configured to move in translation. The first driving member 512 may be configured to drive the first sealing cover 511 to move toward the first channel opening 141 or move away from the first channel opening 141. In some embodiments, the first driving member 512 may comprise a first gear 5121, a first rack 5122, and a first motor 5123. The first gear 5121 may be rotatably disposed in the first door body 14. The first rack 5122 may be disposed on a side of the first sealing cover 511 facing away from the first channel opening 141 and engaged or meshed with the first gear 5121. An output end of the first motor 5123 may be connected to the first gear 5121 to drive the first gear 5121 to rotate, which enables the first gear 5121 to further drive the first rack 5122 and the first sealing cover 511 to move reciprocally, thereby exposing or blocking the first channel opening 141.

To limit the movement of the first sealing cover 511 and ensure the stable engagement between the first gear 5121 and the first rack 5122, in some embodiments, the first sealing member 510 may further comprise a first base plate 513 and a first cover plate 514. The first base plate 513 may be disposed in an end portion of the first door body 14 corresponding to the first channel opening 141. A first base plate opening may be defined corresponding to the first channel opening 141 on the first base plate 513. The first cover plate 514 may cover over the first base plate 513. A first space may be enclosed or defined together by the first base plate 513 and the first cover plate 514. The first sealing cover 511 may be movably disposed in the first space. A first elongated slot 5141 may be defined corresponding to the first rack 5122 on the first cover plate 514. The first gear 5121 may extend through the first elongated slot 5141 to be engaged or meshed with the first rack 5122. A first cover plate opening may be defined corresponding to the first base plate opening on the first cover plate 514. The first cover plate opening may be in communication with the first sub-channel 123. The ice discharged from the first sub-channel 123 may pass smoothly through the first cover plate opening, the first base plate opening, and first channel opening 141. The first space may limit the movement of the first sealing cover 511, thereby ensuring the first sealing cover 511 to move stably and maintaining a stable meshing or engagement between the first gear 5121 and the first rack 5122. To enhance movement smoothness of the first sealing cover 511, a guide wheel (not shown in the figure) may be further disposed on the first sealing cover 511. The guide wheel may be disposed between the first sealing cover 511 and the first base plate 513. The first base plate 513 may be a part of an end panel of the first door body 14 or may be disposed at the end panel of the first door body 14.

In some other embodiments, the first sealing cover 511 may be rotatably arranged. The first driving member 512 may be configured to drive the first sealing cover 511 to rotate so as to expose or block the first channel opening 141.

Similarly, the second sealing cover 521 may be configured to move in translation. The second driving member 522 may be configured to drive the second sealing cover 521 to move toward the second channel opening 151 or move away from the second channel opening 151. In some embodiments, the second driving member 522 may comprise a second gear 5221, a second rack 5222, and a second motor 5223. The second gear 5221 may be rotatably disposed in the second door body 15. The second rack 5222 may be disposed on a side of the second sealing cover 521 facing away from the second channel opening 151 and engaged or meshed with the second gear 5221. An output end of the second motor 5223 may be connected to the second gear 5221 to drive the second gear 5221 to rotate, which enables the second gear 5221 to further drive the second rack 5222 and the second sealing cover 521 to move reciprocally, thereby exposing or blocking the second channel opening 151.

To limit the movement of the second sealing cover 521 and ensure the stable engagement between the second gear 5221 and the second rack 5222, in some embodiments, the second sealing member 520 may further comprise a second base plate 523 and a second cover plate 524. The second base plate 523 may be disposed in an end portion of the second door body 15 corresponding to the second channel opening 151. A second base plate opening may be defined corresponding to the second channel opening 151 on the second base plate 523. The second cover plate 524 may cover over the second base plate 523. A second space may be enclosed or defined together by the second base plate 523 and the second cover plate 524. The second sealing cover 521 may be movably disposed in the second space. A second elongated slot 5241 may be defined corresponding to the second rack 5222 on the second cover plate 524. The second gear 5221 may extend through the second elongated slot 5241 to be engaged or meshed with the second rack 5222. A second cover plate opening may be defined corresponding to the second base plate opening on the second cover plate 524. The second cover plate opening may be in communication with the second sub-channel 124. The ice discharged from the first channel opening 141 may pass smoothly through the second channel opening 151, the second base opening, and the second cover plate opening to enter into the second sub-channel 124. The second space may limit the movement of the second sealing cover 521, thereby ensuring the second sealing cover 521 to move stably and maintaining a stable engagement or meshing between the second gear 5221 and second rack 5222. To enhance movement smoothness of the second sealing cover 521, a guide wheel (not shown in the figure) may be further disposed on the second sealing cover 521. The guide wheel may be disposed between the second sealing cover 521 and the second base plate 523. The second base plate 523 may be a part of an end plate of the second door body 15 or may be disposed at the end panel of the second door body 15.

In some other embodiments, the second sealing cover 521 may be rotatably arranged. The second driving member 522 may be configured to drive the second sealing cover 521 to rotate so as to expose or block the second channel opening 151.

It should be noted that the first sealing member 510 and the second sealing member 520 may be any other sealing mechanism. A structure of the first sealing member 510 and a structure the second sealing member 520 may be the same or different, which is not limited herein.

In addition, the refrigeration apparatus 10 may comprise the movable channel 400, the first sealing member 510, and the second sealing member 520. The movable channel 400, the first sealing member 510, and the second sealing member 520 may work in coordination. In a case where the ice retrieval is desired, the first sealing member 510 may expose the first channel opening 141, the second sealing member 520 may expose the second channel opening 151, and the movable channel 400 may move to communicate or connect between the channel ice outlet 1231 and the channel ice inlet 1241, thereby allowing a smooth and jam-free ice movement without contamination. In a case where the ice retrieval is not desired, the movable channel 400 may move to retract into the corresponding door body. In this case, the first sealing member 510 may cover or block the first channel opening 141 and the second sealing member 520 may cover or block the second channel opening 151, thereby reducing the intrusion of foreign matter into the door bodies or channels and the cold air leakage. The movement manners of the movable channel 400 and the corresponding first sealing member 510 and/or the second sealing member 520 may be independent from or dependent on one another according to actual needs, which may be not further elaborated herein.

In some embodiments, as further shown in FIG. 11, FIG. 11 is another partial schematic structural view of a first door body of a refrigeration apparatus according to some other embodiments of the present disclosure, where a third sealing member is shown. The refrigeration apparatus 10 may further comprise a third sealing member 530. The first sub-channel 123 may extend to a position close to the first channel opening 141. In a case where the first sealing member 510 may be configured to expose or cover the first channel opening 141, the first sealing member 510 may further be configured to expose or block a first position of the first sub-channel 123 that is close to the first channel opening 141. The third sealing member 530 may be disposed in the first door body 14 and may be configured to expose or cover a second position of the first sub-channel 123. In a case where the second sealing member 520 and the third sealing member 530 cover the first sub-channel 123, a spacing cavity 540 may be defined between the first position and the second position.

In a case where the ice retrieval is finished, the second sealing member 520 and the third sealing member 530 may cover the first sub-channel 123. Through the arrangement of both the second sealing member 520 and the third sealing member 530, an ambient air may be separated from an internal air of the first refrigeration compartment 12 through the spacing cavity 540. In this case, the low-temperature first refrigeration compartment 12 may effectively be isolated from the high-humidity ambient air, thereby reducing the chance of water vapor in the ambient air condensing inside the first sub-channel 123.

In some embodiments, the second position may be located between the first position and the ice-making assembly 200. The second sealing member 520 may be configured to isolate the spacing cavity 540 from the external ambient air. The third sealing member 530 may be configured to isolate the spacing cavity 540 from the internal air of the first refrigeration compartment 12.

In addition, though the second sealing member 520 and the third sealing member 530 may pose good sealing performance, due to a continued cooling effect in the first refrigeration compartment 12, a part of air in the spacing cavity 540 that is in contact with the third sealing member 530 may tend to have a relatively low temperature. However, in some embodiments of the present disclosure, since the spacing cavity 540 has a limited space and a humidity of the air in the spacing cavity 540 is low, the air in the spacing cavity 540 may not continuously be precipitated into water vapor. As a result, the chance of condensation may be reduced, thereby further reducing the risk of accumulated moisture freeze that may affect the opening of the third sealing member 530 and the passage of ice.

Under the continued cooling effect in the first refrigeration compartment 12, a temperature of the air in the spacing cavity 540 may gradually drop to a degree that affects a temperature at the second sealing member 520. Since the first sealing member 510 is in contact with the external environment, a prolonged exposure of the first sealing member 510 in a low temperature may cause moisture in the ambient air to condense on an outer surface of the first sealing member 510. In some embodiments, the refrigeration apparatus 10 may further comprise a heating element (not shown in the figure). The heating element may be disposed on an outer side of the first sub-channel 123 and may be configured to intermittently heat the air in the channel. In this way, a temperature difference between the spacing cavity 540 and the environment on both sides of the first sealing member 510 may be reduced, thereby effectively reducing the chance of condensation on the outer surface of the first sealing member 510.

It should be noted that the heating element may be disposed in a foamed layer of the first door body 14 or an additional thermal insulation structure may be arranged in addition to the heating element. The heating element may not affect the low temperature environment inside the first refrigeration compartment 12.

Due to the limited space and low humidity in the spacing cavity 540, the air inside the spacing cavity 540 may not likely to condense on the third sealing member 530. Though heating the air inside the spacing cavity 540, the chance of condensation on a side of the second sealing member 520 away from the spacing cavity 540 may be further reduced. The arrangement of the second sealing member 520 and the third sealing member 530 may effectively reduce the chance of condensation and freezing in the first sub-channel 123.

The third sealing member 530 may be any sealing structure capable of exposing and blocking the first sub-channel 123. The sealing structure may comprise a translationally movable sealing mechanism or a rotatably sealing mechanism, etc. In some embodiments, the third sealing member 530 may comprise a rotating body 531 and a third driving member 532. The rotating body 531 may be rotatably disposed in the first door body 14. The rotating body 531 may comprise a rotating channel 5311 and a sealing block 5312. In a case where the ice retrieval is desired, the third driving member 532 may be configured to drive the rotating body 531 to a position where the rotating channel 5311 is in communication with the first sub-channel 123. In a case where the ice retrieval is finished, the third driving member 532 may be configured to drive the rotating body 531 to a position where the sealing block 5312 blocks the first sub-channel 123.

In some embodiments, the third driving member 532 may comprise an annular gear plate 5321, a driving gear 5322, and a third motor 5323. The annular gear plate 5321 may be disposed on the rotating body 531 and fixed coaxially to the rotating body 531. The driving gear 5322 may be rotatably disposed in the first door body 14 and meshed or engaged with the annular gear plate 5321. An output end of the third motor 5323 may be connected to the driving gear 5322 to drive the driving gear 5322 to rotate, thereby further driving the rotating body 531 to rotate to enable the rotating channel 5311 to communicate or connect with the first sub-channel 123 or to enable the sealing block 5312 to block the first sub-channel 123.

The following may describe the ice-transfer assembly 101 in the refrigeration apparatus 10. The ice-transfer assembly 101 may be configured to accelerate the ice transport through a projection-based ice dispensing method, an ejection-based ice dispensing method, or other methods, thereby ensuring the ice to smoothly pass through the ice-transfer channel 120 with sufficient propulsion. A structure of the ice-transfer assembly 101 may be implemented in various ways. Some implementations may be exemplified below.

### <Projection-based Ice Dispensing Method>

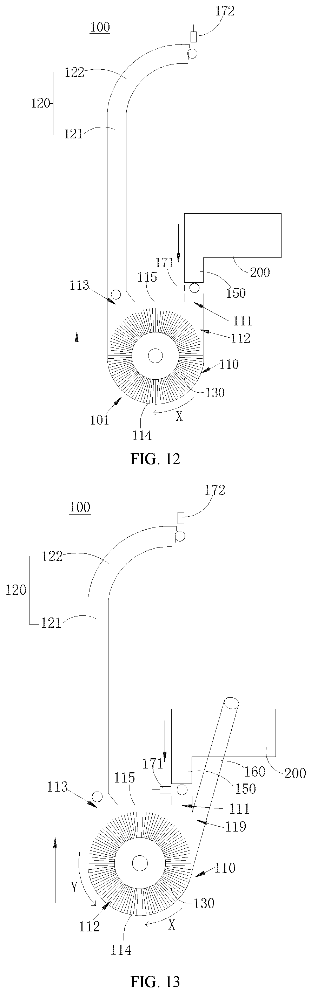

As shown in FIG. 12, FIG. 12 is a partial schematic structural view of an ice-transfer device according to some other embodiments of the present disclosure. The ice-transfer assembly 101 may comprise an ice-transfer portion 110 and a primary rotating member 130. An ice-transfer inlet 111, an ice-transfer chamber 112, and an ice-transfer outlet 113 that may be in communication with each other may be defined in the ice-transfer portion 110. The ice-transfer channel 120 may be in communication with or connected to the ice-transfer chamber 112 through the ice-transfer outlet 113. The primary rotating member 130 may be rotatably disposed in the ice-transfer chamber 112. The ice-transfer inlet 111 and ice-transfer outlet 113 may be located at an outer periphery of the primary rotating member 130. The primary rotating member 130 may be configured to rotate in a first primary rotation direction X, carrying the ice that enters into the ice-transfer chamber 112 from the ice-transfer inlet 111 and throwing the ice out through the ice-transfer outlet 113 toward the ice-transfer channel 120.

In some embodiments of the present disclosure, the ice-transfer portion 110 of the ice-transfer assembly 101 may be disposed in the first refrigeration compartment 12 or in the first door body 14. The ice-retrieving assembly 300 may be disposed on the second door body 15 above the first refrigeration compartment 12. The ice-transfer channel 120 may serve as a transfer path to convey ice from the first refrigeration compartment 12 to the second door body 15. In some embodiments, the first refrigeration compartment 12 may be the freezing compartment and the second refrigeration compartment 13 may be the refrigeration compartment. The ice-transfer inlet 111 may be connected to or in communication with the ice-making assembly 200, allowing the ice to enter the ice-transfer chamber 112 through the ice-transfer inlet 111. The primary rotating member 130 may be configured to carry the ice to rotate in the first primary rotation direction X and project or throw the ice toward the ice-transfer outlet 113. The ice may have an initial velocity. The ice may move from the ice-transfer outlet 113 toward the ice-transfer channel 120 and eventually move to the ice-retrieving assembly 300 along the ice-transfer channel 120. Since the primary rotating member 130 may be configured to rotate continuously at a certain speed, the ice from the ice-making assembly 200 may be thrown rapidly and continuously to the ice-retrieving assembly 300, which enables high-speed ice transfer and efficient ice dispensing, thereby realizing a rapid continuous ice dispensing and a short waiting time for the user. Moreover, the ice may be less likely to melt, thereby ensuring a high ice quality and reducing the risk of ice melting or clumping.

By means of the primary rotating member 130 driving the ice to rotate, the ice may be rapidly delivered to the ice-retrieving assembly 300 after obtaining the initial velocity. Since the ice may move directly from the first refrigeration compartment 12 to the ice-retrieving assembly 300, both a fast ice transfer and an efficient ice dispensing may be realized. Moreover, an evaporator may not have to be disposed in the second refrigeration compartment 13 for maintaining the low temperature of the ice, thereby further increasing the available volume ratio of the second refrigeration compartment 13.

In some embodiments, the refrigeration apparatus 10 may further comprise a delivery channel 150. The delivery channel 150 may be connected to or in communication with the ice-transfer chamber 112 through the ice-transfer inlet 111. The delivery channel 150 may be further configured to be connected to or in communication with an ice outlet end of the ice-making assembly 200, thereby enabling the ice to be delivered into the ice-transfer chamber 112. An ice inlet end of the delivery channel 150 may be located above the ice-transfer inlet 111, allowing the ice to enter into the ice-transfer portion 110 through the delivery channel 150 by gravity. In some embodiments, the ice inlet end of the delivery channel 150 may be level or flush with or below the ice-transfer inlet 111. In this case, the ice may be driven into the ice-transfer chamber 112 through the deliver channel 150 by a power mechanism. Thus, the ice-transfer inlet 111 may be located at an upper part of the ice-transfer chamber 112, a lower part of the ice-transfer chamber 112 or other positions, allowing the ice to enter into the ice-transfer chamber 112 under gravity or an assistance of other power mechanism and be held by the primary rotating member 130.

Through adopting the ice-transfer device 100 in some embodiments of the present disclosure, in a case where the size of ice is within a predetermined range and the primary rotating member 130 rotates at a predetermined speed in the first primary rotation direction X, the ice may usually be smoothly carried and thrown from the ice-transfer outlet 113 toward the ice-transfer channel 120, and be finally transferred smoothly through the ice-transfer channel 120 to the ice-retrieving assembly 300. However, certain special circumstances, such as significant variation in the size of ice, or relative displacement occurring between the ice and the primary rotating member 130 during the primary rotating member 130 carrying the ice to rotate and the ice failing to obtain the required initial velocity when being thrown toward the ice-transfer channel 120 by the primary rotating member 130, etc., may result in the ice failing to be smoothly transferred through the ice-transfer channel 120 to the ice-retrieving assembly 300. Ice that fails to reach the ice-retrieving assembly 300 may fall back into the ice-transfer portion 110 along the ice-transfer channel 120. To reduce the chance of ice blockage affecting the ice transferring efficiency of the ice-transfer device 100, in some embodiments, as shown in FIG. 13, FIG. 13 is a partial schematic structural view of an ice-transfer device according to some other embodiments of the present disclosure. The ice-transfer chamber 112 may further comprise an ice return inlet 119. The ice-transfer device 100 may further comprise an ice return channel 160. The ice return channel 160 may be in communication with the ice return inlet 119. An ice outlet end of the ice return channel 160 may be located lower than an ice outlet end of the ice-transfer channel 120. The primary rotating member 130 may further be configured to rotate in a second primary rotation direction Y, carrying and throwing the ice inside the ice-transfer chamber 112 toward the ice return channel 160 through the ice return inlet 119. The second primary rotation direction Y may be opposite to the first primary rotation direction X. Through the arrangement of the ice return channel 160, in a case where the ice that fails to reach the ice-retrieving assembly 300 falls back through the ice-transfer channel 120 and clogs or blocks the ice-transfer portion 110, additional ice may be stopped from feeding into the ice-transfer portion 110 through the ice-transfer inlet 111. The primary rotating member 130 may further be configured to rotate in the second primary rotation direction Y and throw the ice that clogs or blocks the ice-transfer portion 110 toward the ice return channel 160. Since the ice outlet end of the ice return channel 160 is located below the ice outlet end of the ice-transfer channel 120, the ice may be discharged through the ice return channel 160 at a relatively low speed, which helps reduce the chance of accumulation and clogging in the ice-transfer portion 110 and ensures the normal operation of the ice-transfer device 100.

The ice inlet end of the delivery channel 150 may be connected to or in communication with the ice-making assembly 200. The ice outlet end of the delivery channel 150 may be connected to or in communication with the ice-transfer portion 110. The ice of the ice-making assembly 200 may be transferred to the ice-transfer portion 110 through the delivery channel 150. The ice outlet end of the ice return channel 160 may be connected to or in communication with the delivery channel 150. The primary rotating member 130 may be configured to rotate in the second primary rotation direction Y to return the ice clogging or blocking in the ice-transfer portion 110 back to the delivery channel 150 for re-dropping into the ice-transfer portion 110. In some embodiments, the ice outlet end of the ice return channel 160 may be connected to or in communication with the ice-making assembly 200. In this case, the primary rotating member 130 may be configured to rotate in the second primary rotation direction Y to return the ice clogging or blocking the ice-transfer portion 110 back to the ice-making assembly 200. In some embodiments, the ice return channel 160 may be connected to or in communication with an ice storage container of the ice-making assembly 200.

In some embodiments, the ice-transfer portion 110 may comprise an energy accumulation region 114. An inner wall of the energy accumulation region 114 may surround the outer periphery of the primary rotating member 130. The primary rotating member 130 may be configured to rotate in the first primary rotation direction X to sequentially move the ice through the ice-transfer inlet 111, the energy accumulation region 114, and the ice-transfer outlet 113 into the ice-transfer channel 120. In a case where the ice enters into the ice-transfer inlet 111, since the inner wall of the energy accumulation region 114 may surround the outer periphery of the primary rotating member 130, the primary rotating member 130 may be configured to securely grip and carry the ice to rotate a sufficient rotation angle in the first primary rotation direction X, thereby sufficiently accelerating the ice. In a case where the ice continues to rotate to a position that is outside of the energy accumulation region 114 and corresponds to the ice-transfer outlet 113, the ice may lose a peripheral constraint and obtain the sufficient speed to move toward the ice-transfer channel 120, thereby enabling the ice to move to the ice-retrieving assembly 300 through the ice-transfer channel 120. Through the arrangement of the energy accumulation region 114, the ice may be fully accelerated to obtain sufficient initial velocity, which facilitates the smooth passage of the ice through the ice-transfer channel 120. It should be noted that through adjusting a range of the energy accumulation region 114, as well as the size and rotation speed of the primary rotating member 130, the initial velocity obtained by the ice after passing through the energy accumulation region 114 may be adjusted accordingly. Through tuning the above parameters, the ice may pass through the ice-transfer channel 120 at an appropriate speed, ensuring the successful entry of the ice into the ice-retrieving assembly 300 without generating excessive collision noise due to excessive speed of the ice. Similarly, in a case where the ice that fails to reach the ice-retrieving assembly 300 falls back into the ice-transfer portion 110 through the ice-transfer channel 120, the primary rotating member 130 may be configured to rotate in the second primary rotation direction Y to move the ice from the energy accumulation region 114 toward the ice return channel 160 through the ice return inlet 119. Through the arrangement of energy accumulation region 114, in a case where the primary rotating member 130 is configured to rotate in the second primary rotation direction Y, the ice may be enabled to obtain an initial velocity and then be thrown or projected toward the ice return channel 160 through the ice return inlet 119.

It should be noted that during the process in which the primary rotating member 130 carries the ice and rotates in the first primary rotation direction X, the ice entering the ice-transfer chamber 112 through the ice-transfer inlet 111 may pass by the ice return inlet 119 first. However, at this point, since the ice may rotate with the primary rotating member 130 at a small angle and gain little speed, the ice may not be detached from the primary rotating member 130 and be thrown toward the ice return inlet 119. In a case where the ice continues to rotate with the primary rotating member 130 to a position corresponding to the ice-transfer outlet 113, the ice may gain sufficient speed to be detached from the primary rotating member 130 and be thrown toward the ice-transfer outlet 113. Similarly, during the process in which the primary rotating member 130 carries the ice and rotates in the second primary rotation direction Y, the ice may pass by the ice-transfer inlet 111 first. However, at this point, since the ice may rotate with the primary rotating member 130 at a small angle and gain little speed, the ice may not be detached from the primary rotating member 130 and be thrown toward the ice-transfer inlet 111. In a case where the ice continues to rotate with the primary rotating member 130 to a position corresponding to the ice return inlet 119, the ice may gain sufficient speed to be detached from the primary rotating member 130 and be thrown toward the ice return inlet 119.

To facilitate a smoother transfer of the ice through the ice-transfer channel 120 and improve a success rate of ice projection, in some embodiments, in a case where the primary rotating member 130 rotates in the first primary rotation direction X, the outer periphery of the primary rotating member 130 may be configured to define a first movement trajectory for the ice. A tangential direction at a junction of the energy accumulation region 114 and the ice-transfer outlet 113, which corresponds to the first movement trajectory, may be located within the ice-transfer channel 120. Therefore, in a case where the primary rotating member 130 carries the ice to the junction of the energy accumulation region 114 and the ice-transfer outlet 113, the ice may be about to leave the energy accumulation region 114 to move toward the ice-transfer outlet 113. In this case, the movement direction of the ice may be located in the ice-transfer channel 120, which allows the ice to smoothly move into the ice-transfer channel 120 and then smoothly move to the ice-retrieving assembly 300 through the ice-transfer channel 120, thereby achieving the high success rate of ice projection by the ice-transfer device 100. In some embodiments, the tangential direction at the junction of the energy accumulation region 114 and the ice-transfer outlet 113, which corresponds to the first movement trajectory, may coincide or overlap with the extension direction of an ice transfer segment 121 of the ice-transfer channel 120. The ice may encounter less resistance within the ice transfer segment 121, and less driving force may be required from the primary rotating member 130 to drive the ice to pass through the ice-transfer channel 120.

To facilitate a smoother passage of the ice through the ice return channel 160 and improve the success rate of ice return projection, in some embodiments, in a case where the primary rotating member 130 rotates in the second primary rotation direction Y, the outer periphery of the primary rotating member 130 may be configured to define a second movement trajectory for the ice. A tangential direction at the junction of the energy accumulation region 114 and the ice return inlet 119, which corresponds to the second movement trajectory, may be located within the ice return channel 160. Therefore, in a case where the primary rotating member 130 carries the ice to the junction of the energy accumulation region 114 and the ice return inlet 119, the ice may be about to leave the energy accumulation region 114 and move toward the ice return inlet 119. In this case, the movement direction of the ice may be located within the ice return channel 160, which allows the ice to smoothly move into the ice-making assembly 200 and then smoothly move to the ice-making assembly 200 through the ice return channel 160, thereby reducing the chance of blockage in the ice-transfer portion 110. In some embodiments, the tangential direction at the junction of the energy accumulation region 114 and the ice return inlet 119, which corresponds to the second movement trajectory, may coincide or overlap with the extension direction of the ice return channel 160. The ice may encounter less resistance within the ice return channel 160, and less driving force may be required from the primary rotating member 130 to drive the ice to pass through the ice return channel 160.

In some embodiments, the ice-transfer device 100 may further comprise a first sensing member 171 and a second sensing member 172. The first sensing member 171 may be disposed at the ice-transfer inlet 111 or the delivery channel 150. The first sensing member 171 may be configured to sense whether an ice passes by, indicating that the ice has entered the ice-transfer chamber 112. The second sensing member 172 may be disposed at the ice outlet end of the ice-transfer channel 120. The second sensing member 172 may be configured to sense whether an ice passes by, indicating that the ice has successfully passed through the ice-transfer channel 120 and reached the ice-retrieving assembly 300.

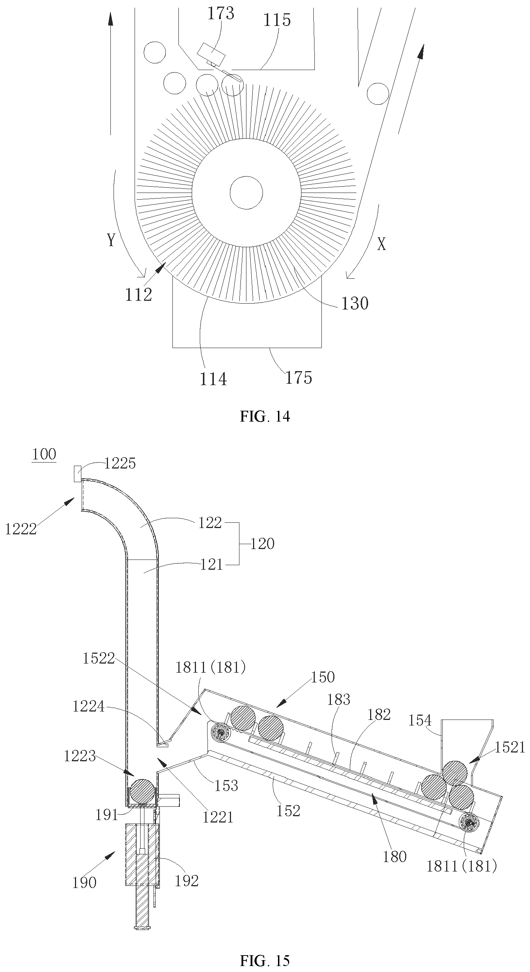

In some embodiments, as shown in FIG. 14, FIG. 14 is a partial schematic structural view of an ice-transfer assembly according to some other embodiments of the present disclosure. The ice-transfer portion 110 may further comprise a connecting region 115 and a third sensing member 173. An inner wall of the connecting region 115 may surround the outer periphery of the primary rotating member 130. The connecting region 115 may be located at a side of the ice-transfer portion 110 that is connected between the ice-transfer inlet 111 and the ice-transfer outlet 113 and is away from the energy accumulation region 114. The third sensing member 173 may be disposed at the connecting region 115. The third sensing member 173 may be configured to sense whether an ice passes by. The third sensing member 173 detecting that the ice has passed by may indicate that the primary rotating member 130 fails to project the ice toward the ice-transfer outlet 113. In a case where the ice may be forced to pass through the connecting region 115, an ice blockage malfunction may likely to occur. In a case where the third sensing member 173 detects that the ice has passed by, the ice-making assembly 200 may be controlled to stop feeding additional ice and the primary rotating member 130 may be controlled to rotate in the second primary rotation direction Y, thereby enabling the ice clogged or blocked in the ice-transfer chamber 112 to be thrown or projected toward the ice return channel 160 to mitigate the ice blockage.

Since the ice may move at high speeds during the projection process, a friction and a collision may likely to occur, which may result in the generation of crushed ice within the chamber. The crushed ice may be relatively difficult to be projected. An accumulation of the crushed ice may hinder the rotation of the primary rotating member 130. In some embodiments, a through hole (not shown in the figure) that communicates with the ice-transfer chamber 112 may be defined at the bottom of the ice-transfer portion 110. The ice-transfer device 100 may comprise a collecting member 175. The collecting member 175 may be disposed below the ice-transfer portion 110. The through hole may allow the crushed ice instead of a whole ice piece to pass through. The collecting member 175 may be configured to collect the crushed ice falling through the through hole. Both the collecting member 175 and the ice-transfer portion 110 may be disposed in the first refrigeration compartment 12, allowing the user to open the first refrigeration compartment 12 to remove and clean the collecting member 175.

### <Ejection-based Ice Dispensing Method>

As shown in FIG. 15, FIG. 15 is an overall schematic structural view of an ice-transfer device according to some other embodiments of the present disclosure.

The ice-transfer assembly 101 may comprise a delivery channel 150, a sorting assembly 180, and an ejection assembly 190. The ice-transfer channel 120 may comprise an ice outlet 1222, an ice inlet 1221, and an ejection region 1223. The ice outlet 1222 may be located above the ice inlet 1221. The ejection region 1223 may be located below the ice inlet 1221. The delivery channel 150 may be connected to or in communication with the ice-transfer channel 120 through the ice inlet 1221. The sorting assembly 180 may be disposed in the delivery channel 150 to deliver the ice one by one to the ice-transfer channel 120. Since the ejection region 1223 may be positioned below the ice inlet 1221, the sorting assembly 180 may be configured to deliver the ice one by one through the ice inlet 1221, allowing the ice to be moved under the force of gravity from the ice inlet 1221 to the ejection region 1223. The ejection assembly 190 may be disposed at an end of the ice-transfer channel 120 away from the ice outlet 1222. The ejection assembly 190 may be configured to eject a predetermined number of ice located in the ejection region 1223 toward the ice outlet 1222. By means of the cooperation between the sorting assembly 180 and the ejection assembly 190, the sorting assembly 180 may be configured to deliver the ice one by one into the ice-transfer channel 120. The ejection assembly 190 may be configured to drive the predetermined number of ice in the ejection region 1223 toward the ice outlet 1222.

In some embodiments of the present disclosure, the sorting assembly 180, the delivery channel 150, and the ejection assembly 190 may be disposed within the first refrigeration compartment 12. The ice-retrieving assembly 300 may be located in the second refrigeration compartment 13 above the first refrigeration compartment 12. The ice-transfer channel 120 may extend from the first refrigeration compartment 12 to the second refrigeration compartment 13. In some embodiments, the first refrigeration compartment 12 may be the refrigeration compartment and the second refrigeration compartment 13 may be the freezing compartment. The sorting assembly 180 may be connected to or in communication with the ice-making assembly 200. The ejection assembly 190 may be configured to eject the ice toward the ice outlet 1222. The ice may have an initial velocity. The ice may move from the ejection region 1223 to the ice outlet 1222 and eventually move to the ice-retrieving assembly 300 along the ice-transfer channel 120. Since the ejection assembly 190 may be configured to continuously eject the ice at a certain speed, the ice from the ice-making assembly 200 may be quickly and continuously ejected to the ice-retrieving assembly 300, which enables high-speed ice transfer and efficient ice dispensing, thereby realizing a rapid continuous ice dispensing and a short waiting time for the user. Moreover, the ice may be less likely to melt, thereby ensuring a high ice quality and reducing the risk of ice melting or clumping

By means of the ejection assembly 190 ejecting the ice, the ice may be rapidly delivered to the ice-retrieving assembly 300 after obtaining the initial velocity. Since the ice moves directly from the first refrigeration compartment 12 to the ice-retrieving assembly 300 of the second door body 15, both a fast ice transfer and an efficient ice dispensing may be realized. Moreover, an evaporator may not have to be disposed in the second refrigeration compartment 13 for maintaining the low temperature of the ice, thereby further increasing the available volume ratio of the second refrigeration compartment 13.

It should be noted that the predetermined number may be one, two, or more, and may be matched to the driving force of the ejection assembly 190. To ensure a high success rate of ice ejection, the driving force of the ejection assembly 190 may be configured to drive more than the predetermined number of ice toward the ice outlet. The ejection assembly 190 may drive one, two, or other quantities of ice located in the ejection region 1223 toward the ice outlet 1222 at a time.

The ejection assembly 190 may comprise a push plate 191 and an electromagnetic ejector 192. The push plate 191 may be movably disposed in the ice-transfer channel 120 along the extension direction of the ice-transfer channel 120. The electromagnetic ejector 192 may be disposed on a side of the push plate 191 away from the ice outlet 1222. An output end of the electromagnetic ejector 192 may be connected to the push plate 191. The electromagnetic ejector 192 may be configured to drive the push plate 191 to eject a predetermined distance from the ejection region 1223 toward the direction of the ice outlet 1222. The ice may obtain the initial velocity under the propulsion of the push plate 191, thereby moving toward the ice outlet 1222. The electromagnetic ejector 192 may be further configured to drive the push plate 191 back to the ejection region 1223. In some embodiments, the electromagnetic ejector 192 may be configured to control both the ejection and the retraction of the push plate 191 through controlling the current switching and to control the ejection speed of the push plate 191 through controlling the current magnitude, thereby adjusting the ejection speed of the ice.

In some embodiments, the delivery channel 150 may comprise a delivery portion 152, a guiding portion 153, and a funnel portion 154. The sorting assembly 180 may be disposed in the delivery portion 152. The delivery portion 152 may comprise an inlet end 1521 and an outlet end 1522. The outlet end 1522 may be located above the ice inlet 1221. The guiding portion 153 may be connected or communicated between the outlet end 1522 and the ice inlet 1221. The funnel portion 154 may be disposed above and at the inlet end 1521. The funnel portion 154 may be configured to receive ice to-be-entered into the delivery portion 152. Since the outlet end 1522 may be located above the ice inlet 1221 and the outlet end 1522 may be connected to the ice inlet 1221 through the guiding portion 153, the ice may move from the outlet end 1522 to the ice inlet 1221 through the guiding portion 153 under the force of gravity. An inner diameter of the funnel portion 154 may gradually increase from an end of the funnel portion 154 connected to the delivery portion 152 to another end of the funnel portion 154 away from the delivery portion 152. In this way, the funnel portion 154 may facilitate the entry of the ice discharged from the ice-making assembly 200 into the delivery channel 150, thereby improving the success rate in which the ice enters into the delivery channel 150.

Furthermore, the outlet end 1522 of the delivery portion 152 may be located above the inlet end 1521 of the delivery portion 152. In this way, the sorting assembly 180 disposed in the delivery portion 152 may need to transport the ice from a lower position to a higher position. The sorting assembly 180 may be configured to elevate the ice to a certain extent, allowing the ice to get closer to the second refrigeration compartment 13 and reducing the required ascent distance of the ice along the ice-transfer channel 120. In this way, the driving force required by the ejection assembly 190 to propel the ice upward may be reduced and the success rate of ice ejection may be improved.

The sorting assembly 180 that is configured to deliver the ice one by one into the ice-transfer channel 120 may be implemented in various structures, as for example illustrated below.

In some embodiments, the delivery portion 152 may be arranged substantially in linear. The sorting assembly 180 may comprise a transmission wheel set 181, a transmission belt 182, a divider 183, and a first driving member (not shown in the figure). The transmission wheel set 181 may be disposed in the delivery portion 152 and may comprise at least two transmission wheels 1811 spaced apart from each other along a length direction of the delivery portion 152. The transmission belt 182 may be configured to loop around the transmission wheel set 181. The first driving member may be configured to drive the transmission wheel 1811 to rotate, thereby further driving the transmission belt 182 to be moved by the rotation of the transmission wheel 1811. The number of the divider 183 may be more than one. The more than one divider 183 may be spaced apart from one another along the transmission belt 182. One piece of ice may be accommodated between any adjacent two dividers 183. The arrangement of the divider 183 may enable or allow the ice to be pushed forward by the divider 183 to move easily along the transmission belt 182 toward the guiding portion 153, thereby enhancing the stability of the ice on the transmission belt 182. The divider 183 may further be configured to isolate the ice, thereby reducing the chance of the ice sticking together. In a case where the ice moves along with the transmission belt 182 and reaches an end of the sorting assembly 180 near the guiding portion 153, the divider 183 may rotate from an upper side of the transmission belt 182 to a lower side of the transmission belt 182. In this way, the ice may fall under gravity into the guiding portion 153 due to the absence of the blocking effect by the divider 183 and move into the ice-transfer channel 120 through the guiding portion 153. A speed of the transmission wheel 1811 driven by the first driving member may be adaptively adjusted according to a speed of the ice driven by the ejection assembly 190 to eject out of the ice-transfer channel 120.

In some embodiments, the ice-transfer channel 120 may comprise an ice transfer segment 121 and a guiding segment 122. The ejection region 1223 and the ice inlet 1221 may be arranged in the ice transfer segment 121. The ice transfer segment 121 may be connected to or in communication with the delivery channel 150 through the ice inlet 1221. The guiding segment 122 may be connected to the ice transfer segment 121 and may be bent or curved toward a side that guides the ice toward the ice-retrieving assembly 300. In a case where the ice moves in the ice transfer segment 121, the ice may be lifted to a sufficient height along the ice transfer segment 121. The guiding segment 122 may be configured to be turned and connected to the ice-retrieving assembly 300. In a case where the ice moves to the guiding segment 122, the ice may have already been elevated a sufficient distance and the guiding segment 122 may be configured to redirect the movement direction of the ice, enabling the ice to move toward the ice-retrieving assembly 300. The ice transfer segment 121 may smoothly transition into the guiding segment 122.

In some embodiments, the ice transfer segment 121 may be substantially arranged along a vertical direction, shortening the distance that the ice rises along the ice transfer segment 121. Obviously, the ice transfer segment 121 may further extend in a direction at a small angle to the vertical direction. In some embodiments, the ice-transfer channel 120 may substantially be arranged in a curved line. The ice-transfer channel 120 may be configured to extend from the ice outlet 1222 to the ice-retrieving assembly 300, ensuring that the ice rises stably and communicates with the ice-retrieving assembly 300.

In some embodiments, an comprised angle at the junction between the extension direction of the guiding segment 122 and the extension direction of the ice transfer segment 121 may be greater than 90° and less than 180°. In this way, the risk of the ice turning too sharply when entering the guiding segment 122 from the ice transfer segment 121 and falling back into the ice transfer segment 121 may be reduced, which ensures that the ice may smoothly pass through the ice-transfer channel and move to the ice-retrieving assembly 300.

To ensure that the sorting assembly 180 may smoothly deliver the ice into the ice-transfer channel 120, the ice-transfer device 100 may further comprise a first actuator member 1224. The first actuator member 1224 may be disposed at the ice inlet 1221. The first actuator member 1224 may be configured to detect whether an ice passes by, indicating that the ice has entered the ice transfer chamber. In a case where the first actuator member 1224 detects the ice has passed by, the ice may fall into the ejection region 1223 through the ice inlet 1221 and the ejection assembly 190 may prepare for an ejection operation to drive the ice in the ejection region 1223 toward the ice outlet 1222.

To ensure that the ejection assembly 190 may successfully eject the ice out of the ice outlet 1222 of the ice-transfer channel 120, in some embodiments, the ice-transfer device 100 may further comprise a second actuator member 1225. The second actuator member 1225 may be disposed at the ice outlet 1222. The second actuator member 1225 may be configured to detect whether the ice passes by, indicating that the ice has successfully passed through the ice-transfer channel 120 to reach the ice-retrieving assembly 300. In a case where the second actuator member 1225 detects the ice has passed by, the sorting assembly 180 may continue delivering ice to the ice-transfer channel 120 and the ejection assembly 190 may prepare for the next ejection operation. In a case where the second actuator member 1225 still fails to detect the passage of the ice after the ejection assembly 190 has performed an ejection operation, the ice may fail to pass through the ice outlet 1222 after being ejected but instead falling back into the ejection region 1223 through the ice outlet 1222. In this case, an ice blockage may occur, and the sorting assembly 180 may be controlled to pause the ice supply and the ejection assembly 190 may further be controlled to perform another ejection operation to eject the ice that failed to be ejected outward.

In some other embodiments, the ice-transfer device 100 may further comprise a weight sensor. The weight sensor may be disposed on the push plate 191. In a case where the ice enters the ice-transfer channel 120 and falls onto the push plate 191, the weight sensor may detect a weight change. The ejection assembly 190 may prepare for an ejection operation to drive the ice in the ejection region 1223 toward the ice outlet 1222. In a case where the ice fails to pass through the ice outlet 1222 and instead falls back into the ejection region 1223 along the ice-transfer channel 120 after the ejection assembly 190 ejects the ice to the ice outlet 1222, the weight sensor may detect the weight change again. In this case, the sorting assembly 180 may be controlled to pause the ice supply and the ejection assembly 190 may be controlled to perform another ejection operation to eject the ice that failed to be ejected outward.

The first actuator member 1224 may be configured to work in conjunction with the second actuator member 1225 or the weight sensor to accurately detect the status of the ice in the ice-transfer device 100.

The above embodiments may describe several implementable structures for the ice-transfer assembly 101. The following may provide a detailed description of the ice-transfer channel 120 in some embodiments of the present disclosure.

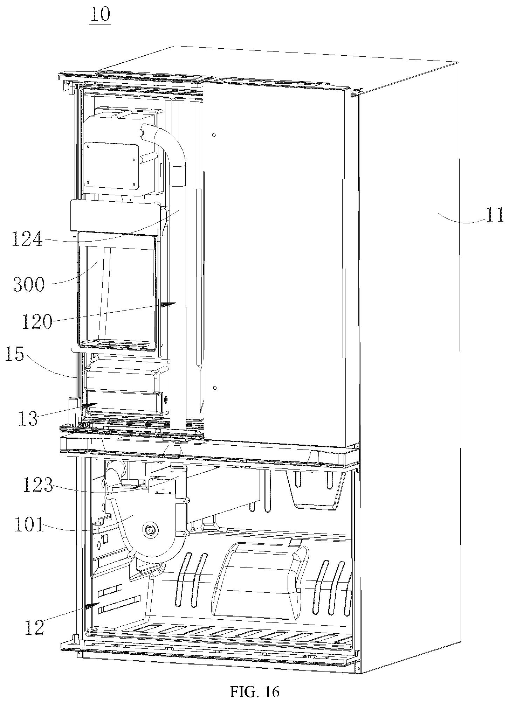

As shown in FIG. 16, FIG. 16 is a schematic structural view of an ice-transfer channel being disposed on door bodies of both a first refrigeration compartment and a second refrigeration compartment according to some other embodiments of the present disclosure. Through arranging the first sub-channel 123 on the first door body 14 and the second sub-channel 124 on the second door body 15, an internal space of both the first refrigeration compartment 12 and the second refrigeration compartment 13 may not be occupied, thereby increasing the available volume ratio of the refrigeration apparatus 10 without resulting in additional protrusions on the external appearance of the refrigeration apparatus 10, and thus optimizing the appearance.

In some embodiments, the first door body 14 may be rotatably disposed on the cabinet body 11. In some other embodiments, the first refrigeration compartment 12 may comprise a first drawer. The first drawer may be slidably disposed on the cabinet body 11. The first door body 14 may be fixed to the first drawer. In a case where the ice-transfer portion 110 is disposed on the first door body 14, during the process of the first door body 14 being closed or opened by rotating or by pushing or pulling, the ice-transfer channel 120 in the first door body 14 and the ice-transfer portion 110 may both move along with the first door body 14. In this case, the first sub-channel 123 may become misaligned with the second sub-channel 124 as the first door body 14 opens. In a case where the first door body 14 closes, the first sub-channel 123 may become aligned with the second sub-channel 124, without affecting the passage of the ice.

In a case where the refrigeration apparatus 10 is a double-door refrigeration apparatus 10, the second door body 15 may comprise two second sub-door bodies. The second sub-door body may be relatively narrow. The space for setting the ice-retrieving assembly 300 on the second sub-door may be limited. Further, since the ice-making assembly 200 may be located close to a side wall and the ice-transfer portion 110 may be located on the first door body 14, to facilitate the connection of the ice-transfer channel 120 and enable the ice ejected from the ice-transfer portion 110 into the ice-transfer channel 120 to be easily elevate along the ice-transfer channel 120, the second sub-channel 124 of the ice-transfer channel 120 may be located on a side of the ice-retrieving assembly 300 that is close to a rotation axis of the second door body 15. In this case, in line with the position of the ice-transfer portion 110, the first sub-channel 123 and the second sub-channel 124 may be linearly connected, facilitating the ice to pass through the ice-transfer channel 120 to the ice-retrieving assembly 300.

Obviously, in some single-door refrigerators, the second door body 15 may be a single panel door body that has a relatively large width, allowing more space for setting the ice-retrieving assembly 300. The second sub-channel 124 of the ice-transfer channel 120 may be optionally disposed on a side of the ice-retrieving assembly 300, either away from or closer to the rotation axis of the second door body 15. In this case, in line with the position of the ice-transfer portion 110, the first sub-channel 123 and the second sub-channel 124 may be linearly connected, facilitating the ice to pass through the ice-transfer channel 120 to the ice-retrieving assembly 300.

Obviously, the ice-transfer channel 120, along with the cabinet body 11 structure or the position of other components such as the ice-transfer portion 110, may further be disposed in other locations of the refrigeration apparatus 10, which will not be limited herein.

It may be understood that the term "more than one" herein may refer to at least two, such as two, three, etc., unless explicitly limited. Additionally, the terms "comprise" and "comprise" and any variations thereof may be intended to cover non-exclusive inclusion. For example, a process, method, system, product, or apparatus comprising a series of steps or units may be not limited to the listed steps or units but may optionally comprise steps or units not listed, or other inherent steps or units for these processes, methods, products, or devices. The term "and/or" may merely describe the relationship between objects, indicating three possible relationships: A and/or B, which means A alone, A and B together, or B alone. Furthermore, the character "/" herein may generally indicate an "or" relationship between the connected objects.

The above descriptions are merely embodiments of the present disclosure and may not limit the scope of the present disclosure. Any equivalent structure or equivalent process transformation made using the content of the present disclosure and the accompanying drawings, or applied directly or indirectly in other related technical fields, may further be comprised within the protection scope of the present disclosure.

## Claims

1. A refrigeration apparatus, comprising:
a cabinet body, comprising a first refrigeration compartment and a second refrigeration compartment, wherein the second refrigeration compartment is located above the first refrigeration compartment;
a first door body, configured to expose or cover the first refrigeration compartment and defining a first channel opening at a top portion of the first door body;
a second door body, configured to expose or cover the second refrigeration compartment and defining a second channel opening at a bottom portion of the second door body;
an ice-making assembly, disposed in the first refrigeration compartment;
an ice-retrieving assembly, disposed on the second door body;
an ice-transfer channel, comprising a first sub-channel and a second sub-channel, wherein the first sub-channel is disposed in the first door body, the first channel opening is disposed corresponding to the first sub-channel, the second sub-channel is disposed in the second door body, the second sub-channel is in communication with the ice-retrieving assembly, and the second channel opening is disposed corresponding to the second sub-channel;
an ice-transfer assembly, disposed in the first refrigeration compartment, being in communication with the first sub-channel, and configured to drive an ice tube produced by the ice-making assembly to be transferred to the ice-retrieving assembly through the ice-transfer channel;
a first sealing member, disposed on the first door body and configured to expose or cover the first channel opening; and
a second sealing member, disposed on the second door body and configured to expose or cover the second channel opening.

2. The refrigeration apparatus as claimed in claim 1, wherein the first sealing member comprises:
a first sealing cover, movably disposed on the first door body; and
a first driving member, configured to drive the first sealing cover to move away from the first channel opening, or configured to drive the first sealing cover to move to cover the first channel opening.

3. The refrigeration apparatus as claimed in claim 1 or claim 2, wherein the second sealing member comprises:
a second sealing cover, movably disposed on the second door body; and
a second driving member, configured to drive the second sealing cover to move away from the second channel opening, or configured to drive the second sealing cover to move to cover the second channel opening.

4. The refrigeration apparatus as claimed in claim 3, wherein the first sealing member is further configured to expose or block a first position of the first sub-channel that is close to the first channel opening, and the refrigeration apparatus further comprises:
a third sealing member, disposed in the first door body and configured to expose or cover a second position of the first sub-channel;
wherein in a case where the second sealing member and the third sealing member cover the first sub-channel, a spacing cavity is defined between the first position and the second position.

5. The refrigeration apparatus as claimed in claim 2, wherein the first driving member comprises:
a first gear, rotatably disposed in the first door body;
a first rack, disposed on a side of the first sealing cover facing away from the first channel opening and engaged with the first gear; and
a first motor, wherein an output end of the first motor is connected to the first gear and the first motor is configured to drive the first gear to rotate.

6. The refrigeration apparatus as claimed in claim 5, wherein the first sealing member further comprises:
a first base plate, disposed in an end portion of the first door body corresponding to the first channel opening, wherein a first base plate opening is disposed corresponding to the first channel opening on the first base plate; and
a first cover plate, covering over the first base plate, wherein a first space is enclosed by the first base plate and the first cover plate, the first sealing cover is movably disposed in the first space, a first elongated slot is defined corresponding to the first rack on the first cover plate, the first gear extends through the first elongated slot to be engaged with the first rack, and a first cover plate opening is defined corresponding to the first base plate opening on the first cover plate.

7. The refrigeration apparatus as claimed in claim 3 or claim 4, wherein the second driving member comprises:
a second gear, rotatably disposed in the second door body;
a second rack, disposed on a side of the second sealing cover facing away from the second channel opening and engaged with the second gear; and
a second motor, wherein an output end of the second motor is connected to the second gear and the second motor is configured to drive the second gear to rotate.

8. The refrigeration apparatus as claimed in claim 7, wherein the second sealing member further comprises:
a second base plate, disposed in an end portion of the second door body corresponding to the second channel opening, wherein a second base plate opening is disposed corresponding to the second channel opening on the second base plate; and
a second cover plate, covering over the second base plate, wherein a second space is enclosed by the second base plate and the second cover plate, the second sealing cover is movably disposed in the first space, a second elongated slot is defined corresponding to the second rack on the second cover plate, the second gear extends through the second elongated slot to be engaged with the second rack, and a second cover plate opening is defined corresponding to the second base plate opening on the second cover plate.

9. The refrigeration apparatus as claimed in claim 4, wherein the third sealing member comprises:
a rotating body, rotatably disposed in the first door body and comprising a rotating channel and a sealing block; and
a third driving member, configured to drive the rotating body to rotate to a position where the rotating channel is in communication with the first sub-channel, or configured to drive the rotating body to rotate to a position where the sealing block blocks the first sub-channel.

10. The refrigeration apparatus as claimed in claim 9, wherein the third driving member comprises:
an annular gear plate, disposed on the rotating body and fixed coaxially to the rotating body;
a driving gear, rotatably disposed in the first door body and engaged with the annular gear plate; and
a third motor, wherein an output end of the third motor is connected to the driving gear and the third motor is configured to drive the driving gear to rotate.
